# EUROPEAN PATENT APPLICATION

(11) **EP 1 676 669 A1**
(43) Date of publication of application: **05.07.2006**
(21) Application number: 05025959.7
(22) Date of filing: 29.11.2005
(51) Int. Cl.: B23K 35/36, B23K 35/30

(54) **Cored electrode for reducing diffusible hydrogen**

(30) Priority: 03.01.2005 US 28344
(71) Applicant: LINCOLN GLOBAL, INC., Santa Fe Springs CA 90670 (US)
(72) Inventor: Karogal, Nikhil U., Cleveland Ohio 44106 (US); Katiyar, Rajeev, Mentor Ohio 44060 (US)
(74) Representative: Hennicke, Ernst Rüdiger

(57) **Abstract**

A cored electrode to form a weld bead with a low diffusible hydrogen in a gas shielded electric arc welding process. The cored electrode includes a metal sheath and a fill composition. The filling composition includes a slag forming agent and at least two fluorine containing compounds.

## Description

The invention relates generally to the field of welding and more particularly directed to electrodes having improved weld bead formation properties, and even more particularly directed to cored electrodes that form weld beads having reduced amounts of diffusible hydrogen.

### BACKGROUND OF THE INVENTION

In the field of arc welding, the main types of welding processes are gas-metal arc welding with solid (GMAW) or metal-cored wires (GMAW-C), gas shielded flux-cored arc welding (FCAW-G), self shielded flux-cored arc welding (FCAW-S), shielded metal arc welding (SMAW) and submerged arc welding (SAW). Of these processes, gas metal arc welding with solid or metal-cored electrodes are increasingly being used for joining or overlaying metallic components. These types of welding processes are becoming increasingly popular because such processes provide increased productivity and versatility. Such increase in productivity and versatility results from the continuous nature of the welding electrodes in gas metal arc welding (GMAW & GMAW-C) which offers substantial productivity gains over shielded metal arc welding (SMAW). Moreover, these electrodes produce very good looking welds with very little slag, thus saving time and expense associated with cleaning welds and disposing of slag, a problem that is often encountered in the other welding processes.

In gas metal arc welding with solid or cored electrodes, a shielding gas is used to provide protection for the weld against atmospheric contamination during welding. Solid electrodes are appropriately alloyed with ingredients that, in combination with the shielding gas, provide porosity free welds with the desired physical and mechanical properties. In cored electrodes, these ingredients are on the inside, in the core (fill) of a metallic outer sheath, and provide a similar function as in the case of solid electrodes.

Solid and cored electrodes are designed to provide, under appropriate gas shielding, a solid, substantially porosity free weld with yield strength, tensile strength, ductility and impact strength to perform satisfactorily in the final applications. These electrodes are also designed to minimize the quantity of slag generated during welding. Cored electrodes are used increasingly as an alternative to solid wires because of increased productivity during welding fabrication of structural components. Cored electrodes are composite electrodes consisting of a core (fill) material surrounded by a metallic outer sheath. The core consists mainly of metal powder and fluxing ingredients to help with arc stability, weld wetting and appearance, etc., such that the desired physical and mechanical properties are obtained in the weld. Cored electrodes are manufactured by mixing up the ingredients of the core material and depositing them inside a formed strip, and then closing and drawing the strip to the final diameter. Cored electrodes provide increased deposition rates and produce a wider, more consistent weld penetration profile compared to solid electrodes. Moreover, they provide improved arc action, generate less fume and spatter, and provide weld deposits with better wetting compared to solid electrodes.

In the art of welding, much prior effort has been expended in developing flux compositions of the type having predetermined flux components intended to perform in predetermined manners. A large number of compositions have been developed for use as fluxes in arc welding both for use generally as welding fluxes. Fluxes are utilized in arc welding to control the arc stability, modify the weld metal composition, and provide protection from atmospheric contamination. Arc stability is commonly controlled by modifying the composition of the flux. It is therefore desirable to have substances which function well as plasma charge carriers in the flux mixture. Fluxes also modify the weld metal composition by rendering impurities in the metal more easily fusible and providing substances with which these impurities may combine, in preference to the metal to form slag. Other materials may be added to lower the slag melting point, to improve slag fluidity, and to serve as binders for the flux particles.

Cored electrodes are commonly used in electric arc welding of steel base metals. These electrodes generally yield high strength welds in a single pass and multiple passes at high welding speeds. These electrodes are formulated to provide a solid, substantially nonporous weld bead with tensile strength, ductility and impact strength to meet the desired end use of various applications.

One of the many challenges during the formation of a weld metal is to reduce the amount of diffusible hydrogen in the weld bead. Diffusible hydrogen is a known cause of cracking in weld beads.

In view of the present state of the art of the fill compositions used in conjunction with cored welding electrodes, there is a need for a welding electrode that forms a weld bead having a reduced hydrogen content.

### SUMMARY OF THE INVENTION

The present invention pertains to welding electrodes, and more particularly, to a welding electrode that includes a fill composition which reduces the amount of hydrogen in the weld bead. The fill composition of the present invention is particularly directed to cored electrodes having a metal sheath that surrounds the fill composition in the core of the sheath; however, the fill composition can be applied to other types of electrodes (e.g., coating on a stick electrodes, etc.), or be used as part of a flux composition in a submerged arc welding process. The fill composition of the present invention is particularly formulated for use with electrodes used to weld mild and low alloy steel; however, the fill composition can be used with electrodes for the formation of welding beads on other types of metals. The metal electrode is typically formed primarily from iron (e.g., carbon steel, low carbon steel, stainless steel, low alloy steel, etc.); however, the base metal can be primarily formed of other materials. The fill composition typically constitutes at least about 1 weight percent of the total electrode weight, and not more than about 80 weight percent of the total electrode weight, and typically about 8-60 weight percent of the total electrode weight, and more typically about 10-40 weight percent of the total electrode weight, even more typically about 11-30 weight percent of the total electrode weight, and still even more about 12-20 weight percent of the total electrode weight. The fill composition includes one or more slag forming agents that are used to facilitate in the formation of the weld bead and/or to at least partially shield the formed weld bead from the atmosphere. Non-limiting examples of such slag forming agents include titanium oxide (e.g., rutile, etc.) and/or a titanium oxide containing compound (e.g., KSiTiO₂, NaSiTiO₂, etc.). The fill composition of the present invention also includes a compound used to reduce the amount of hydrogen in the weld bead. Fluorine containing compounds have been found to reduce the amount of hydrogen in the formed weld bead. This reduction of hydrogen is believed to be accomplished in at least two ways. It is believed that during the welding process, some of the fluorine compound decomposes and releases fluorine gas into the atmosphere. The released fluorine gas has a shielding effect which shields the molten weld bead from surrounding moisture and/or other hydrogen sources. In addition, it is believed that some of the fluorine reacts with the surrounding hydrogen and forms hydrogen fluoride which is insoluble in the molten weld metal. It is also believed that some of the low melting fluorine containing compound coats the weld bead to form a barrier against the surrounding hydrogen. As such, the amount of hydrogen that is able to diffuse into the weld bead is diminished. It is further believed that during the welding process, some of the fluorine compound decomposes and enters into the slag that covers the molten weld metal. The fluorine in the slag is believed to modify the slag lattice to enable increased transfer of hydrogen from the molten weld metal. Although it has been found that increasing the amount of fluorine containing compound in the fill composition reduces the amount of hydrogen in the formed weld bead, the addition of large amounts of fluorine containing compound adversely affects the arc stability during welding and/or the composition of the slag. As such the gains in lowering the hydrogen content of the weld bead are more than offset by the undesired slag composition and/or properties, and/or the instability of the arc during welding. The fill composition of the present invention overcomes this problem by combining two to or more different fluorine containing compounds, which in their aggregate, provide sufficient amounts of fluorine during the welding process to achieve the desired low levels of hydrogen in the weld bead without adversely affecting arc stability and the slag properties. The fill composition can also include one or more metal alloying agents selected to at least closely match the desired weld metal composition and/or to obtain the desired properties of the formed weld bead. Non-limiting examples of such alloying metals include manganese, silicon and titanium. The fill composition can also include one or more deoxidizers to reduce the adverse effects of oxygen about the weld metal. Non-limiting examples of deoxidizers include magnesium, silicon, titanium and manganese. The fill composition can also include one or more micro-alloying agents to improve the physical properties of the weld bead. One non-limiting micro-alloying agent that can be used is boron.

In another and/or alternative aspect of the present invention, the fill composition includes at least two fluorine containing compounds such that the total fluoride content of the fill composition is at least about 0.5 weight percent. Typically, the total fluoride content of the fill composition is less than about 8 weight percent, and more typically less than about 6%, and even more typically about 1-5%, still more typically about 1-4%, and still even more typically about 2-3.5%; however, it can be appreciated that other fluorine amounts can be used. In one non limiting embodiment of the invention, at least two fluorine containing compounds each contribute at least about 0.2 weight percent fluorine to the fill composition, and typically at least about 0.3 weight percent, and even more typically at least about 0.5 weight percent. In another and/or alternative non-limiting example, the weight percent ratio of the fluorine content in one fluoride containing compound in the fill composition is about 0.1-10:1 of the fluorine content of the aggregate of the other fluoride containing compounds in the fill composition. In another non-limiting example, this ratio is typically about 0.2-5:1, and more typically about 0.25-4:1. Various types of fluorine containing compounds can be included in the fill composition such as, but not limited to, AlF₃, BaF₂, CaF₂, Na₃AlF₆, K₃AlF₆, Na₂SiF₆, K₂SiF₆, MnF₃, SrF₂ and/or the like. As can be appreciated, other or additional fluorine containing compounds can be included in the fill composition.

In yet another and/or alternative aspect of the present invention, the composition of the metal sheath of the welding electrode is selected to at least closely match the desired weld metal composition. Typically the metal sheath includes a majority of iron when welding a ferrous based workpiece (e.g., carbon steel, stainless steel, etc.); however, the composition of the sheath can include various types of metals to achieve a particular weld bead composition. In one embodiment of the invention, the metal sheath primarily includes iron and can include one or more other elements such as, but not limited to, aluminum, antimony, bismuth, boron, carbon, cobalt, copper, lead, manganese, molybdenum, nickel, niobium, silicon, sulfur, tin, titanium, tungsten, vanadium, zinc and/or zirconium. In still another and/or alternative embodiment of the invention, the iron content of the metal sheath is at least about 80 weight percent.

In still another and/or alternative aspect of the present invention, the fill composition includes one or more weld metal protection agents and/or modifying agents. The components of the fill can include metal alloying agents (e.g., aluminum, boron, calcium, carbon, chromium, iron, manganese, nickel, silicon, titanium, zirconium, etc.) that are at least partially used to provide protection to the weld metal during and/or after a welding procedure, to facilitate in a particular welding procedure, and/or to modify the composition of the weld bead. In one embodiment of the invention, the fill composition includes at least one of the weld metal protection agents. In another and/or alternative embodiment of the invention, the fill composition includes one or more alloying agents used to facilitate in forming a weld metal with the desired composition. In still another and/or alternative embodiment of the invention, the fill composition includes one or more slag modifiers. The slag modifiers are typically used to increase and/or decrease the viscosity of the slag, to improve the ease of slag removal from the weld metal, reduce fume production, reduce spattering, etc.

In still yet another and/or alternative aspect of the present invention, a shielding gas is used in conjunction with the welding electrode to provide protection to the weld bead from elements and/or compounds in the atmosphere. The shielding gas generally includes one or more gases. These one or more gases are generally inert or substantially inert with respect to the composition of the weld bead. In one embodiment, argon, carbon dioxide or mixtures thereof are at least partially used as a shielding gas. In one aspect of this embodiment, the shielding gas includes about 2-40 percent by volume carbon dioxide and the balance of argon. In another and/or alternative aspect of this embodiment, the shielding gas includes about 5-25 percent by volume carbon dioxide and the balance of argon. As can be appreciated, other and/or additional inert or substantially inert gases can be used.

In yet another and/or alternative aspect of the present invention, the electrode of the present invention includes a fill composition that has a slag system which enhances the weld layer(s) or buffer layer(s) formed by the electrode. The one or more slag forming agents in the fill composition also at least partially shield the formed weld bead from the atmosphere. The components of the fill composition can include one or more metal oxides (e.g., aluminum oxide, boron oxide, calcium oxide, chromium oxide, iron oxide, magnesium oxide, niobium oxide, potassium oxide, silicon dioxide, sodium oxide, tin oxide, titanium oxide, vanadium oxide, zirconium oxide, etc.), one or more metal carbonates (e.g., calcium carbonate, etc.), one or more metal fluorides (e.g., barium fluoride, bismuth fluoride, calcium fluoride, potassium fluoride, sodium fluoride, Teflon, etc.), and/or one or more metal alloying agents (e.g., aluminum, antimony, bismuth, boron, calcium, carbon, chromium, cobalt, copper, iron, lead, manganese, molybdenum, nickel, niobium, silicon, sulfur, tin, titanium, tungsten, vanadium, zinc, zirconium, etc.). In one non-limiting embodiment of the invention, the slag system of the fill composition constitutes at least about 1 weight percent of the electrode, typically less than 30 weight percent of the electrode, more typically about 3-20 weight percent of the electrode, and still more typically about 4-14 weight percent of the electrode. The slag system of the fill composition is used to at least partially provide protection to the weld metal or buffer layer during and/or after a deposition procedure and/or to facilitate in a particular deposition procedure. In still yet another non-limiting embodiment of the invention, the slag system can include at least one slag wetting agent, arc stabilization agent, slag removal agent, and/or a surface deposition agent. The slag wetting agent, when used, facilitates in ensuring that the slag fully covers the deposited metal to protect the deposited metal from the atmosphere until the metal deposited layers has at least partially solidified and/or to facilitate in the appearance of the deposited metal. The stabilization agent, when used, facilitates is producing a quiet arc that minimizes spatter. The surface deposition agent, when used, contributes to the shine and overall surface appearance of the deposited metal. The slag removal agent, when used, contributes to the easy removal of the slag on and/or around the deposited metal. The slag system can also include agents that increase and/or decrease the viscosity of the slag, and/or reduce fume production.

It is a primary object of the invention to provide a welding process that results in a reduction of the amount of diffusible hydrogen in the weld bead.

Another and/or alternative object of the present invention is the provision of a welding process that includes the use of a gas shielded cored electrode.

Still another and/or alternative object of the present invention is the provision of a welding electrode that includes a large percentage of fluorine generating compound.

Yet another and/or alternative object of the present invention is the provision of a cored welding electrode that includes two or more fluorine generating compounds to enhance the fluorine content of the cored electrode.

These and other objects and advantages will become apparent from the discussion of the distinction between the invention and the prior art and when considering the preferred embodiment as shown in the accompanying drawings.

### BRIEF DESCRIPTION OF THE DRAWINGS

FIGURE 1 is a graph illustrating the general relationship between the amount of diffusible hydrogen in a weld bead and the amount of fluorine in the cored electrode;
FIGURES 2 and 3 are graphs illustrating the fluorine content generated by one compound in a cored electrode in relation to arc stability; and,
FIGURE 4 is a graph illustrating the increased fluorine content generated by two compounds in a cored electrode in relation to arc stability.

### DETAILED DESCRIPTION OF THE INVENTION

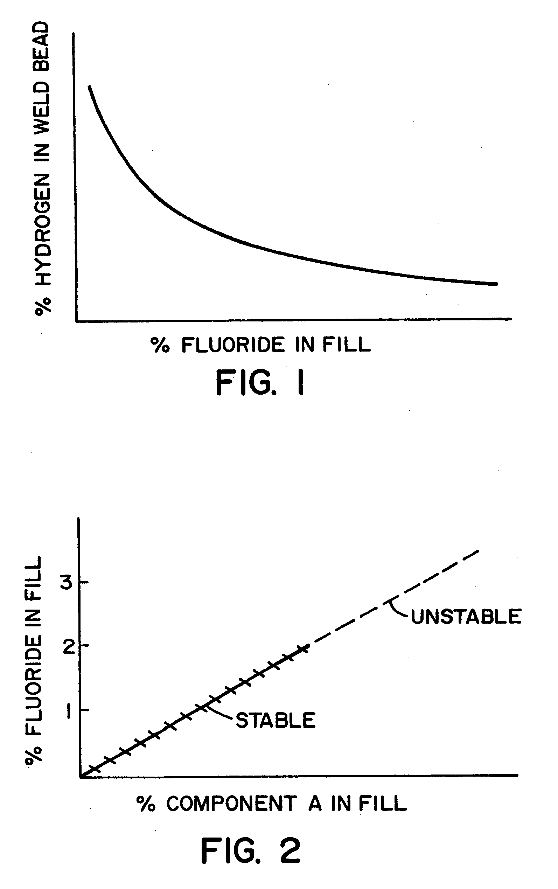

Referring now in greater detail to the drawings, wherein the showings are for the purpose of illustrating preferred embodiments of the invention only, and not for the purpose of limiting the invention, FIGURE 1 illustrates the general relationship between the amount of diffusible hydrogen in a weld bead and the amount of fluorine in the fill composition of a cored electrode. As shown in the graph, higher levels of fluorine in the fill composition result in a reduced amount of diffusible hydrogen in the weld bead. One of the problems associated with the use of large quantities of fluorine containing compound in the fill of the cored electrode is the adverse affect of the fluorine containing compound on the stability of the welding arc during a welding operation. An unstable arc can result in increased spattering and reduced weld bead quality and appearance. Another problem associated with the use of large quantities of fluorine containing compound in the fill of the cored electrode is the adverse affect of the fluorine containing compound on the slag composition and properties. Prior art cored electrodes have addressed these problems by reducing the amount of fluorine containing compound in the fill of the cored electrode until acceptable arc stability is obtained and an acceptable slag is formed during a welding operation. Due to the different composition of fluorine containing compounds usable in the fill of the cored electrode, different maximum acceptable quantities in the fill composition can be used.

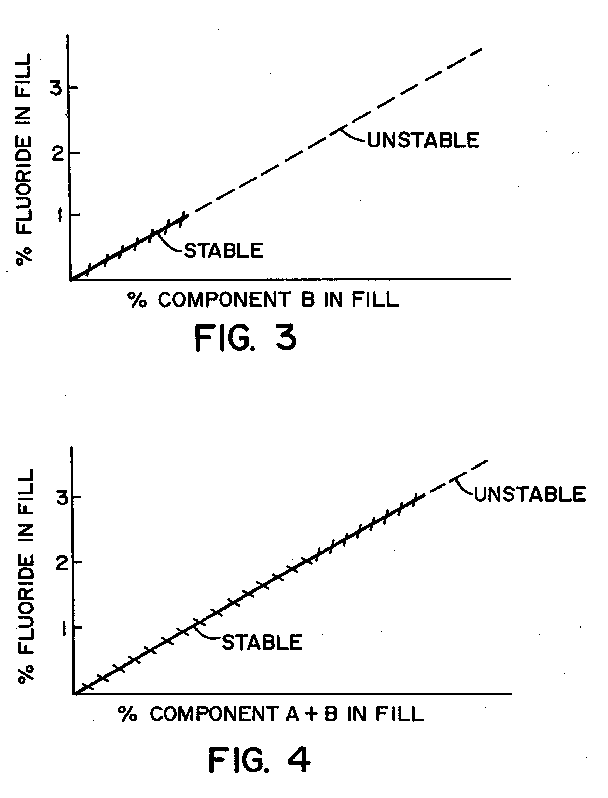

FIGURES 2 and 3 exemplify the past problems associated with arc stability and the amount of fluorine containing compound in the fill of the cored electrode. FIGURE 2 illustrates a prior art cored electrode that includes a fluorine containing compound identified as Compound A. As shown in FIGURE 2, Compound A can be added to the fill composition of the cored electrode such that the fluorine content of the fill composition is about 2 weight percent without adversely affecting the arc stability during a welding operation. When Compound A is added in an amount sufficient to cause the fluorine content of the fill composition to exceed about 2 weight percent, the resulting arc stability is unstable during a welding operation. As such, the amount of Compound A that can be added to the cored electrode is limited to an amount such that the fluorine content of the fill composition does not exceed 2 weight percent of the fill composition. FIGURE 3 illustrates a prior art cored electrode that includes a fluorine containing compound identified as Compound B. As shown in FIGURE 3, Compound B can be added to the fill composition of the cored electrode such that the fluorine content of the fill composition is about 1 weight percent without adversely affecting the arc stability during a welding operation. When Compound B is added in an amount sufficient to cause the fluorine content of the fill composition to exceed about 1 weight percent, the resulting arc stability is unstable during a welding operation. As such, the amount of Compound B that can be added to the cored electrode is limited to an amount such that the fluorine content of the fill composition does not exceed 1 weight percent of the fill composition. In the past, if the fill composition that included Compound A or B did not achieve low enough diffusible hydrogen levels in the weld bead, the amount of Compound A or B could not be increased to achieve the desired diffusible hydrogen levels.

The cored electrode of the present invention overcomes the past limitations of prior art cored electrodes by including two or more fluorine containing compounds in the fill composition of the cored electrode. Many types of fluorine containing compounds can be used, such as, but not limited to, AlF₃, BaF₂, CaF₂, Na₃AlF₆, K₃AlF₆, Na₂SiF₆, K₂SiF₆, MnF₃, SrF₂ and/or the like. It has been found that by aggregating the amount of two or more fluorine containing compounds in the fill composition of the cored electrode, the fluorine content of the fill composition can be increased above prior obtained levels without adversely affecting the arc stability during a welding operation. FIGURE 4 illustrates this concept. FIGURE 4 illustrates a cored electrode that includes Compounds A and B. Compound A is included in the fill composition in an amount such that the fluorine content of the fill composition provided by Compound A does not exceed about 2 weight percent of the fill composition. As illustrated in FIGURE 2, the inclusion of greater amounts of Compound A will adversely affect the arc stability during a welding operation. FIGURE 4 also illustrates that Compound B is added in the fill composition in an amount such that the fluorine content of the fill composition provided by Compound B does not exceed about 1 weight percent of the fill composition. As illustrated in FIGURE 3, the inclusion of greater amounts of Compound B will adversely affect the arc stability during a welding operation. As shown in FIGURE 4, the aggregate amount of fluorine in the fill composition is about 3 weight percent and that such high fluorine content in the fill composition does not adversely affect the arc stability during a welding operation. As such, low diffusible hydrogen levels in the weld bead are achievable by the use of two or more fluorine containing compounds in the fill composition of a cored electrode. The obtainable reduction in the amount of diffusible hydrogen in the weld bead by use of the two or more fluorine containing compounds in the fill composition of the cored electrode was about 20-40%.

A general formulation of the fill composition (weight percent) in accordance with the present invention is set forth as follows:

| | |
|---|---|
| Non-fluorine Containing Slag Forming Agent | 20-70% |
| Fluorine Content of Two or More Fluorine Containing Compounds | 1-8% |
| Metal Alloying Agent | 0-70% |

In another more specific general formulation of the fill composition (weight percent):

| | |
|---|---|
| Non-fluorine Containing Slag Forming Agent | 30-65% |
| Fluorine Content of Two or More Fluorine Containing Compounds | 1-6% |
| Metal Alloying Agent | 15-60% |

In the above general formulas, the fluorine content generated by each of the fluorine containing compounds is at least about 0.05 weight percent of the fill composition, and typically at least about 0.1 weight percent, more typically at least about 0.2 weight percent. In the above general formulas, the weight percent of the fill composition is typically about 8-60 weight percent of the cored electrode, and more typically about 10-20 weight percent of the cored electrode. The metal sheath that can be used to form the weld bead can include about 0-0.2 weight percent B, about 0-0.2 weight percent C, about 0-12 weight percent Cr, about 0-5 weight percent Mn, about 0-2 weight percent Mo, less than about 0.01% N, about 0-5 weight percent Ni, less than about 0.014% P, about 0-4 weight percent Si, less than about 0.02% S, about 0-0.4 weight percent Ti, about 0-0.4 weight percent V and about 75-99.9 weight percent Fe.

During an arc welding process, a shielding gas is used with the cored electrode.

One specific non-limiting example of a fill composition (weight percent) that includes two fluorine containing compounds is as follows:

| | |
|---|---|
| Metal Oxide Containing Slag Forming Agent | 33 - 70% |
| First Fluorine Containing Compound | 1 - 10% |
| Second Fluorine Containing Compound | 1 - 10% |
| Metal Alloying Agents (Excluding Iron Powder) | 0.5 - 30% |
| Iron Powder | 2 - 20% |

In another specific non-limiting example of a fill composition (weight percent) that includes two fluorine containing compounds is as follows:

| | |
|---|---|
| TiO₂ | 33 - 62% |
| KSiTiO₂ | 3 - 7% |
| K₂SiF₆ | 0.5 - 5% |
| Na₂AlF₆ | 0.5 - 2% |
| FeB | 0.25 - 0.7% |
| FeMn | 5 - 18% |
| FeSi | 4 - 8% |
| FeTi | 2 - 5% |
| Mg | 3 - 6% |
| Cast Iron Powder | 0 - 3% |
| Fe powder | 4 - 16% |

In still another specific non-limiting example of a fill composition (weight percent) that includes three fluorine containing compounds is as follows:

| | |
|---|---|
| TiO₂ | 33 - 60% |
| KSiTiO₂ | 3 - 7% |
| CaF₂ | 0.5 - 6% |
| K₂SiF₆ | 0.5 - 2% |
| Na₂AlF₆ | 0.5 - 7% |
| FeB | 0.25 - 0.7% |
| FeMn | 5 - 18% |
| FeSi | 4 - 8% |
| FeTi | 2 - 5% |
| Mg | 3 - 6% |
| Cast Iron Powder | 0 - 3% |
| Fe powder | 4 - 16% |

In yet another specific non-limiting example of a fill composition (weight percent) that includes two fluorine containing compounds is as follows:

| | |
|---|---|
| TiO₂ | 38 - 55% |
| KSiTiO₂ | 4 - 6% |
| K₂SiF₆ | 3 - 5.5% |
| Na₂AlF₆ | 1 - 2% |
| FeB | 0.3 - 0.5% |
| FeMn | 10 - 15% |
| FeSi | 5 - 7% |
| FeTi | 2.5 - 4.5% |
| Mg | 3 - 5.5% |
| Cast Iron Powder | 1 - 3% |
| Fe powder | 8 - 14% |

In the four specific examples set forth above, the weight percent of the fill composition is about 13-20 weight percent of the cored electrode, and the metal sheath includes about 0-0.2 weight percent B, about 0-0.2 weight percent C, about 0-12 weight percent Cr, about 0-5 weight percent Mn, about 0-2 weight percent Mo, less than about 0.01% N, about 0-5 weight percent Ni, less than about 0.014% P, about 0-4 weight percent Si, less than about 0.02% S, about 0-0.4 weight percent Ti, about 0-0.4 weight percent V and about 75-99.9 weight percent Fe. During an arc welding process, a shielding gas is used with the cored electrode.

In the examples set forth above, TiO₂ and KSiTiO₂ are slag forming agents. KSiTiO₂ is also a slag modifying agent and an arc stabilizing agent. As can be appreciated, other or additional slag forming, slag modifying and/or arc stabilizing agents can be used in the fill composition. CaF₂, K₂SiF₆ and Na₂AlF₆ are the fluorine generating compounds in the fill composition. Each of the fluorine generating compounds are present in an amount supply at least about 0.2 weight percent fluorine to the fill composition. CaF₂ is also a slag forming agent. K₂SiF₆ and Na₂AlF₆ are also arc stabilizing agents and slag modifying agents. As can be appreciated, other or additional fluorine generating compounds can be used in the fill composition. FeMn, FeSi, FeTi, and Mg are alloying agents and/or deoxidizing agents. These components are added to the fill composition to achieved the desired metal alloy composition of the weld metal and to reduce the oxygen in and about the weld metal during the welding process. As can be appreciated, other or additional alloying agents and/or deoxidizers can be used in the fill composition. Mg is primary added as a deoxidizer. FeB is primarily added as a micro-alloying agent. As can be appreciated, other or additional micro-alloying agents can be used in the fill composition. Cast Iron Powder and Fe powder are also added to achieve the desired metal alloy composition of the weld metal.

These and other modifications of the discussed embodiments, as well as other embodiments of the invention, will be obvious and suggested to those skilled in the art from the disclosure herein, whereby it is to be distinctly understood that the foregoing descriptive matter is to be interpreted merely as illustrative of the present invention and not as a limitation thereof.

## Claims

1. A cored electrode to form a weld bead with a low diffusible hydrogen in a gas shielded electric arc welding process comprising a metal sheath and a fill composition, said fill composition including a slag forming agent and at least two fluorine containing compounds, each of said fluorine containing compounds including at least about 0.2 weight percent fluorine based on the weight percent of said fill composition, said fill composition including at least about 0.5 weight percent fluorine.

2. The cored electrode as defined in claim 1, wherein said slag forming agent includes a metal oxide.

3. The cored electrode as defined in claim 1 or 2, wherein a majority of said slag forming agent includes said metal oxide.

4. The cored electrode as defined in any one of claims 1 to 3, wherein at least two fluorine containing compounds include AlF₃, BaF₂, CaF₂, Na₃AlF₆, K₃AlF₆, Na₂SiF₆, K₂SiF₆, MnF₃, SrF₂ or mixtures thereof.

5. The cored electrode as defined in any one of claims 1 to 4, wherein at least two fluorine containing compounds include about 1-8 weight percent fluorine based on the weight percent of said fill composition.

6. The cored electrode as defined in any one of claims 1 to 5, wherein at least two of said fluorine containing compounds each include at least about 0.4 weight percent fluorine based on the weight percent of said fill composition.

7. The cored electrode as defined in any one of claims 1 to 6, wherein said metal sheath includes at least about 80 weight percent iron.

8. The cored electrode as defined in any one of claims 1 to 7, wherein said fill composition constitutes about 8-60 weight percent of a total weight of said cored electrode.

9. The cored electrode as defined in any one of claims 1 to 8, wherein said fill composition includes at least about 1 weight percent iron powder and at least about 1 weight percent metal allowing agent, said metal alloying agent including a metal selected from the group consisting of manganese, silicon, titanium or mixtures thereof.

10. The cored electrode as defined in anyone of claims 1 to 9, wherein said fill composition includes:
| | |
|---|---|
| Metal Oxide Containing Slag Forming Agent | 33 - 70% |
| First Fluorine Containing Compound | 1 - 10% |
| Second Fluorine Containing Compound | 1 - 10% |
| Metal Alloying Agents (Excluding Iron Powder) | 0.5 - 30% |
| Iron Powder | 2 - 20% |

11. The cored electrode as defined in anyone of claims 1 to 10, wherein said fill composition includes:
| | |
|---|---|
| TiO₂ | 33 - 62% |
| KSiTiO₂ | 3 - 7% |
| CaF₂ | 0 - 8% |
| K₂SiF₆ | 0.5 - 5% |
| Na₂AlF₆ | 0.5 - 2% |
| FeB | 0.25 - 0.7% |
| FeMn | 5 - 18% |
| FeSi | 4 - 8% |
| FeTi | 2 - 5% |
| Mg | 3 - 6% |
| Cast Iron Powder | 0 - 3% |
| Fe powder | 4 - 16%. |

12. A method of forming a weld bead having a low diffusible hydrogen content comprising:
a) providing a cored electrode that includes a metal sheath and a fill composition, said fill composition including a slag forming agent and at least two fluorine containing compounds, each of said fluorine containing compounds including at least about 0.2 weight percent fluorine based on the weight percent of said fill composition; and,
b) at least partially melting said cored electrode by an electric current to cause said melted portion of said cored electrode to be deposited on a workpiece.

13. The method as defined in claim 12, including the step of directing a shielding gas to said workpiece to at least partially shield said melted portion of said cored electrode being deposited on a workpiece.

14. The method as defined in claim 13, wherein said shielding gas includes argon, carbon dioxide or mixtures thereof.

15. The method as defined in any one of claims 12 to 14, wherein said slag forming agent includes a metal oxide.

16. The method as defined in any one of claims 12 to 15, wherein a majority of said slag forming agent includes said metal oxide.

17. The method as defined in any one of claims 12 to 16, wherein at least two fluorine containing compounds include AlF₃, BaF₂, CaF₂, Na₃AlF₆, K₃AlF₆, Na₂SiF₆, K₂SiF₆, MnF₃, SrF₂ or mixtures thereof.

18. The method as defined in any one of claims 12 to 17, wherein at least two fluorine containing compounds include about 1-8 weight percent fluorine based on the weight percent of said fill composition.

19. The method as defined in any one of claims 12 to 18, wherein at least two of said fluorine containing compounds each include at least about 0.2 and preferably at least 0.4 weight percent fluorine based on the weight percent of said fill composition.

20. The method as defined in any one of claims 12 to 19, wherein said metal sheath includes at least about 80 weight percent iron.

21. The method as defined in any one of claims 12 to 20, wherein said fill composition constitutes about 8-60 weight percent of a total weight of said electrode.

22. The method as defined in any one of claims 12 to 21, wherein said fill composition includes at least about 1 weight percent iron powder and at least about 1 weight percent metal alloying agent, said metal alloying agent including a metal selected from the group consisting of manganese, silicon, titanium or mixtures thereof.

23. The method as defined in any one of claims 12 to 22, wherein said fill composition includes:
| | |
|---|---|
| Metal Oxide Containing Slag Forming Agent | 33 - 70% |
| First Fluorine Containing Compound | 1 - 10% |
| Second Fluorine Containing Compound | 1 - 10% |
| Metal Alloying Agents (Excluding Iron Powder) | 0.5 - 30% |
| Iron Powder | 2 - 20% |

24. The method as defined in any one of claims 12 to 23, wherein said fill composition includes:
| | |
|---|---|
| TiO₂ | 33 - 62% |
| KSiTiO₂ | 3 - 7% |
| CaF₂ | 0 - 8% |
| K₂SiF₆ | 0.5 - 5% |
| Na₂AlF₆ | 0 . 5 - 2% |
| FeB | 0.25 - 0.7% |
| FeMn | 5 - 18% |
| FeSi | 4 - 8% |
| FeTi | 2 - 5% |
| Mg | 3 - 6% |
| Cast Iron Powder | 0 - 3% |
| Fe powder | 4 - 16% |
